Europäisches Patentamt

European Patent Office

Office européen des brevets

(11) Numéro de publication: **0 402 957**

**A2**

## (12) DEMANDE DE BREVET EUROPEEN

(21) Numéro de dépôt: **90114649.8**

(22) Date de dépôt: **08.07.86**

(51) Int. Cl.5: **A01D 34/66**

Cette demande a été déposée le 31 - 07 - 1990 comme demande divisionnaire de la demande mentionnée sous le code INID 60.

(30) Priorité: **18.07.85 FR 8511137**

(43) Date de publication de la demande:
**19.12.90 Bulletin 90/51**

(60) Numéro de publication de la demande initiale en application de l'article 76 CBE : **0 211 785**

(84) Etats contractants désignés:
**DE GB IT NL**

(71) Demandeur: **KUHN S.A.**
**4, Impasse des Fabriques**
**F-67700 Saverne(FR)**

(72) Inventeur: **L'inventeur a renoncé àsa désignation**

(54) **Faucheuse.**

(57) Dans la faucheuse de l'invention, il est prévu qu'au cours de la rotation de l'organe pivotant (72) apparaissant lors du déplacement en hauteur du groupe de fauche (2) autorisé par le quadrilatère de liaison déformable (38, 39), ledit organe pivotant (72) fait varier le bras de levier de l'effort de rappel exercé par l'organe élastiquement déformable (70) par rapport à l'axe (75) dans un sens tel que le bras de levier augmente lorsque l'effort de rappel diminue, c'est-à-dire lorsque le groupe de fauche (2) se déplace vers le haut.

FIG.4

La présente invention concerne une faucheuse comportant un groupe de fauche, un dispositif d'attelage permettant d'atteler celle-ci à un véhicule moteur, ledit groupe de fauche étant lié audit dispositif d'attelage au moyen d'un quadrilatère de liaison déformable, et un mécanisme de délestage du groupe de fauche comprenant un organe élastiquement déformable lié directement ou indirectement au dispositif d'attelage et exerçant un effort de délestage sur le groupe de fauche par l'intermédiaire d'un dispositif de transmission de l'effort qui comporte un organe pivotant lié au dispositif d'attelage, de sorte à pouvoir pivoter autour d'un axe.

Une telle faucheuse est décrite dans la FR-A-2 110 911. Cette faucheuse connue comporte un groupe de fauche qui est lié, au moyen d'un parallélogramme de liaison, à un châssis s'appuyant sur le sol par l'intermédiaire de deux roues et comportant un timon permettant d'atteler la faucheuse à un véhicule moteur. Le groupe de fauche peut s'adapter au relief du sol indépendamment du châssis et ceci grâce au parallélogramme de liaison déformable qui permet au groupe de fauche de se déplacer en hauteur. Cette faucheuse connue est par ailleurs équipée d'un mécanisme de délestage qui exerce un effort de délestage sur le groupe de fauche afin que ce dernier repose moins lourdement sur le sol. Ce mécanisme de délestage comprend deux ressorts mécaniques de traction s'étendant au niveau de la poutre maîtresse du châssis et parallèlement à celle-ci. Chaque ressort est lié à un câble de traction respectif qui passe sur deux poulies dont les axes de rotation sont perpendiculaires et qui sont liées au châssis de sorte à pouvoir tourner librement autour de leur axe de rotation respectif. A son extrémité éloignée du ressort correspondant, chaque câble est ensuite lié à une barre de liaison respective du parallélogramme de liaison. Les deux ressorts exercent ainsi un effort de délestage sur le groupe de fauche par l'intermédiaire du dispositif de transmission de l'effort constitué par les câbles et les poulies sur lesquelles passent ces derniers. Le mécanisme de délestage de cette faucheuse connue présente le même inconvénient que celui d'autres mécanismes connus et qui réside dans le fait que le délestage procuré varie substantiellement avec le déplacement en hauteur du groupe de fauche. En effet, lorsque le groupe de fauche se déplace vers le haut, les deux ressorts se détendent et exercent un effort de délestage moins important sur le groupe de fauche, lequel repose alors plus lourdement sur le sol.

Le but de la présente invention consiste à modifier cette machine connue pour solutionner ce problème.

A cet effet, la faucheuse telle que décrite dans le préambule de la revendication 1, est caractérisée par le fait qu'au cours de la rotation de l'organe pivotant apparaissant lors du déplacement en hauteur du groupe de fauche autorisé par le quadrilatère de liaison déformable, ledit organe pivotant fait varier le bras de levier de l'effort de rappel exercé par l'organe élastiquement déformable par rapport à l'axe dans un sens tel que ledit bras de levier augmente lorsque l'effort de rappel diminue, c'est-à-dire lorsque le groupe de fauche se déplace vers le haut.

Grâce à cet agencement, il est possible d'éliminer l'inconvénient de la faucheuse connue, étant donné que la variation du bras de levier de l'effort de rappel exercé par l'organe élastiquement déformable compense, en partie au moins, la variation de l'intensité de cet effort lors du déplacement en hauteur du groupe de fauche autorisé par le quadrilatère de liaison déformable.

Dans une réalisation préférentielle, il sera d'ailleurs prévu que la variation du bras de levier soit telle que le délestage reste sensiblement constant, du moins dans une certaine plage donnée du déplacement en hauteur du groupe de fauche.

Selon une autre caractéristique supplémentaire de l'invention, il peut être prévu que l'axe autour duquel l'organe pivotant peut pivoter soit confondu avec l'axe de l'une des articulations de l'une des barres de liaison du quadrilatère de liaison déformable.

Dans une réalisation avantageuse, l'axe autour duquel l'organe pivotant peut pivoter, sera l'axe de l'articulation liant l'une des barres de liaison du quadrilatère de liaison déformable au dispositif d'attelage.

Dans une réalisation particulièrement simple et efficace, l'organe pivotant pourra être solidaire de l'une des barres de liaison du quadrilatère de liaison déformable. L'effort de délestage procuré par l'organe élastiquement déformable est ainsi directement appliqué au quadrilatère de liaison déformable.

Selon une autre caractéristique supplémentaire de l'invention, il pourra être prévu que l'organe élastiquement déformable s'étende au moins sensiblement horizontalement.

Dans une réalisation particulièrement avantageuse, l'organe élastiquement déformable sera logé au moins partiellement à l'intérieur de l'espace délimité par le dispositif d'attelage. De préférence, l'organe élastiquement déformable sera entièrement logé à l'intérieur dudit espace.

Dans l'invention, l'organe élastiquement déformable pourra être avantageusement constitué par un ressort mécanique ou hydropneumatique, de préférence de traction.

Dans une réalisation particulière, le dispositif de transmission de l'effort pourra comporter en sus deux organes de traction pliables, tandis que l'organe pivotant sera constitué par un guide sur lequel s'enroulent les deux organes de traction pliables. Ce guide présente deux pistes : une première piste sur laquelle s'enroule au moins partiellement et à laquelle est lié le premier organe de traction pliable lié par ailleurs à l'organe élastiquement déformable, et une deuxième piste sur laquelle s'enroule au moins partiellement et à laquelle est lié le deuxième organe de traction pliable lié par ailleurs directement ou indirectement au groupe de fauche. L'excentricité de la première piste est variable de sorte que le bras de levier du couple de rappel, exercé par l'organe élastiquement déformable, varie lorsque le guide tourne autour de son axe de rotation, tandis que l'excentricité de la deuxième piste est sensiblement constante par rapport à l'axe de rotation du guide.

D'autres caractéristiques et avantages de l'invention sont contenus dans les autres revendications et dans la description ci-dessous de deux exemples de réalisation non limitatifs de l'invention, faite au regard du dessin annexé sur lequel,

   - la figure 1 représente une vue de l'arrière d'une faucheuse en position de travail,
   - la figure 2 représente une vue de dessus de la faucheuse de la figure 1 en position de travail,
   - la figure 3 représente une vue schématique d'un premier exemple de réalisation de l'invention,
   - la figure 4 représente, à une échelle agrandie, le guide équipant le mécanisme de délestage de la faucheuse de la figure 3, et
   - la figure 5 représente une vue schématique d'un deuxième exemple de réalisation de l'invention.

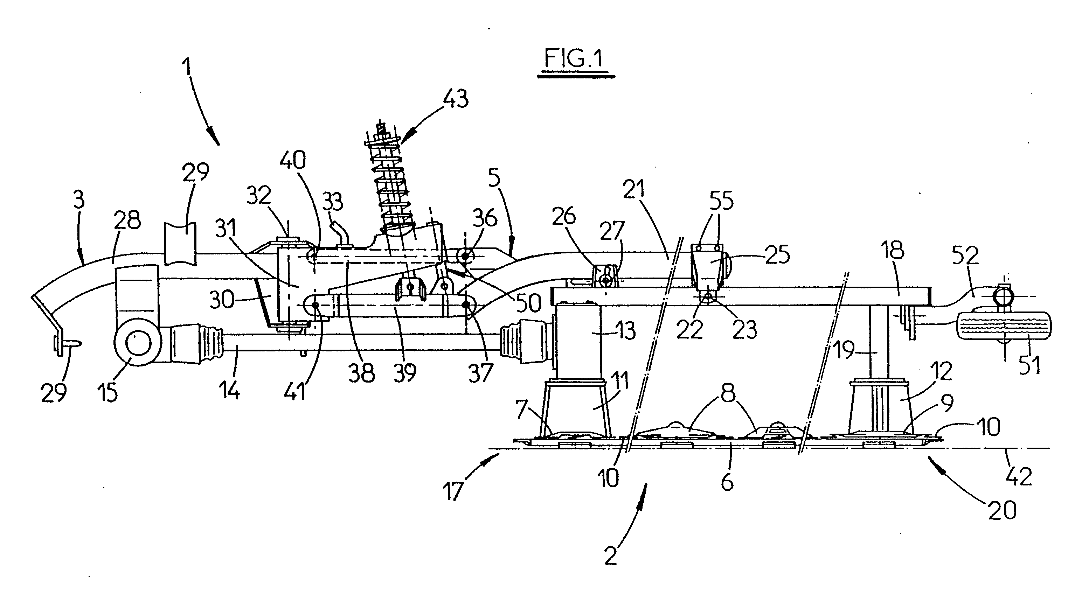

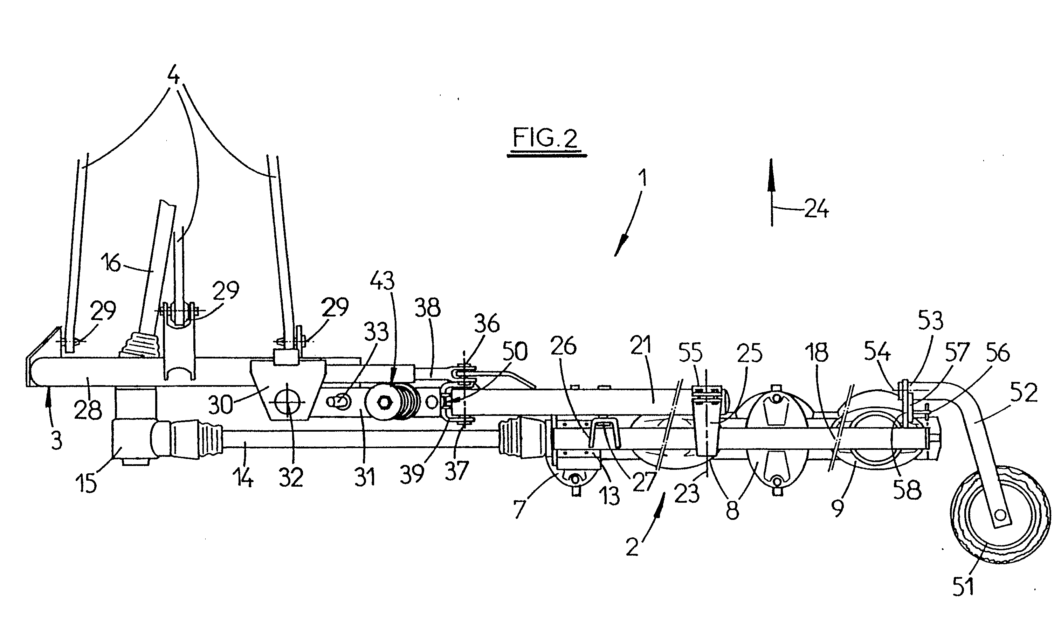

Sur les figures 1 et 2, on voit une faucheuse (1) qui se trouve en position de travail. Celle-ci comporte un groupe de fauche (2), un dispositif d'attelage (3) qui permet d'atteler la faucheuse à un véhicule tracteur (4) (voir figure 2) dont on n'a représenté que partiellement l'attelage, et un dispositif de liaison (5) liant le groupe de fauche (2) au dispositif d'attelage (3).

Le groupe de fauche (2) comporte un carter (6) à la partie supérieure duquel sont guidés en rotation des organes de coupe (7 ; 8 ; 9). Ces organes de coupe (7 ; 8 ; 9) comportent des outils de coupe (10). Les organes de coupe extrêmes (7 ; 9) sont surmontés par un tambour rotatif (11 ; 12).

A la partie supérieure du tambour (11) surmontant le premier organe de coupe extrême (7), s'étend un carter d'entrée (13). Ce carter d'entrée (13) contient des éléments d'entraînement qui sont à la portée de l'homme de l'art. Une partie de ces éléments d'entraînement traverse la partie supérieure du tambour (11) et entraîne le premier organe de coupe (7) et le tambour (11), de même que d'autres éléments d'entraînement logés à l'intérieur du carter (6). Ces autres éléments d'entraînement sont également à la portée de l'homme de l'art. Ils servent à l'entraînement en rotation des organes de coupe (8 ; 9) et du tambour (12).

L'entraînement des différents éléments d'entraînement qui viennent d'être décrits, est réalisé par un arbre à joints universels (14) qui s'étend entre le carter d'entrée (13) et un carter de renvoi (15) lié au dispositif d'attelage (3). Le carter de renvoi (15) reçoit, quant-à-lui, le mouvement à partir de la prise de force du véhicule tracteur (4) auquel est attelée la faucheuse (1), par l'intermédiaire d'un arbre à joints universels (16) (voir figure 2).

Le carter d'entrée (13) sert également à lier l'extrémité gauche (17) du carter (6) à l'une des extrémités d'une poutre support (18). A l'autre extrémité, la poutre support (18) est munie d'une jambe (19) qui s'étend vers le bas et pénètre à l'intérieur du tambour (12) par la partie supérieure de celui-ci. La jambe (19) sert à lier l'extrémité droite (20) du carter (6) à la poutre support (18).

Sensiblement à la verticale du centre de gravité du groupe de fauche (2), la poutre support (18) est liée à l'extrémité d'une poutre de liaison (21) au moyen d'une articulation (22) d'axe (23) sensiblement dirigé dans la direction d'avance (24) au travail (voir figure 2). A cet effet, la poutre de liaison (21) est munie d'une chape (25). Cette chape (25) est fixée sur la poutre de liaison (21) à l'aide de moyens de fixation (55) qui autorisent le déplacement de la chape (25) et du groupe de fauche (2) le long de l'axe longitudinal de la poutre de liaison (21). On peut ainsi adapter la position du groupe de fauche (2) à la voie du véhicule tracteur (4) auquel est attelée la faucheuse. Le pivotement du groupe de fauche (2) autour de l'articulation (22, 23) est limité dans les deux sens par un secteur de limitation (26) solidaire de la poutre support (18), qui collabore avec un index (27) solidaire de la poutre de liaison (21). Cet index (27) peut être déplacé suivant l'axe longitudinal de la poutre de liaison (21) lors de l'adaptation du groupe de fauche (2) à la voie du véhicule tracteur (4).

Le dispositif d'attelage (3) est constitué par une structure d'attelage (28) comportant trois points d'attelage (29) qui servent à la liaison de la structure d'attelage (28) à l'attelage arrière à trois points du véhicule tracteur (4).

A son extrémité proche du groupe de fauche (2), la structure d'attelage (28) comporte une chape (30). Dans cette chape (30) est articulé un organe support (31) qui peut pivoter par rapport à la structure d'attelage (28) autour d'un axe de pivotement (32) dirigé vers le haut. Le pivotement de l'organe support (31) qui fait partie du dispositif d'attelage (3), par rapport à la structure d'attelage (28), est condamné lorsque le groupe de fauche (2) est en position de travail. Cette condamnation du pivotement de l'organe support (31) par rapport à la structure d'attelage (28) est réalisée par un verrou (33) qui agit entre la structure d'attelage (28) et l'organe support (31).

A son extrémité éloignée de la chape (25), c'est-à-dire la plus proche du dispositif d'attelage (3), la poutre de liaison (21) est liée au moyen d'articulations (36 ; 37), d'axe sensiblement dirigé dans la direction d'avance (24) au travail, à deux barres de liaison (38 ; 39).

A leur autre extrémité, les barres de liaison (38 ; 39) sont liées à l'organe support (31) au moyen d'articulations (40 ; 41) d'axe également sensiblement dirigé dans la direction d'avance (24) au travail.

L'ensemble organe support (31) - barres de liaison (38 ; 39) - poutre de liaison (21) forme ainsi un quadrilatère de liaison déformable. Dans l'exemple représenté, ce quadrilatère de liaison déformable est sensiblement un parallélogramme. La poutre de liaison (21) se déplace ainsi en hauteur en restant sensiblement parallèle à sa position qui est représentée. De cette sorte, l'angle de pivotement possible du groupe de fauche (2) dans un sens et dans l'autre, reste conservé, même si le groupe de fauche (2) travaille dans un plan horizontal différent du plan horizontal (42) sur lequel il repose sur la figure 1.

La faucheuse (1) comporte par ailleurs un mécanisme de délestage (43) qui agit sur le quadrilatère de liaison déformable. Ceci a pour conséquence de créer, au niveau de l'articulation (22, 23), une force dirigée vers le haut qui agit en sens inverse du poids du groupe de fauche (2). Ce groupe de fauche (2) ne repose alors sur le sol qu'avec un poids apparent plus faible que son poids propre.

La faucheuse comporte aussi un dispositif amortisseur (50) qui agit également sur le quadrilatère de liaison déformable. Ce dispositif amortisseur (50) empêche le groupe de fauche (2) de sautiller sur le sol sur lequel il opère. Ceci améliore le travail réalisé par le groupe de fauche (2).

Sur la figure 1, on voit encore qu'à l'extrémité de la poutre support (18) éloignée du dispositif d'attelage (3), est agencée une roue (51). Cette roue (51) est liée à un bras de suspension (52). Ce bras de suspension (52) est lui-même lié à la poutre support (18) au moyen d'une articulation (53) d'axe (54) dirigé transversalement à la direction d'avance (24) au travail. Dans les figures 1 et 2, la roue (51) se trouve en position de travail. Dans cette position, elle est éloignée du sol, de sorte à ne pas gêner l'opération de fauchage réalisée par les organes de coupe (7 ; 8 ; 9). Sur la figure 2, on voit que la roue (51) est maintenue dans cette position par un verrou (56) qui traverse successivement un trou aménagé dans une plaque (57) solidaire du bras de suspension (52) et un trou aménagé dans une plaque (58) solidaire de la poutre support (18).

La plaque (57) solidaire du bras de suspension (52) possède un autre trou dans lequel sera engagé le verrou (56) lorsque la roue (51) se trouvera en position abaissée de transport.

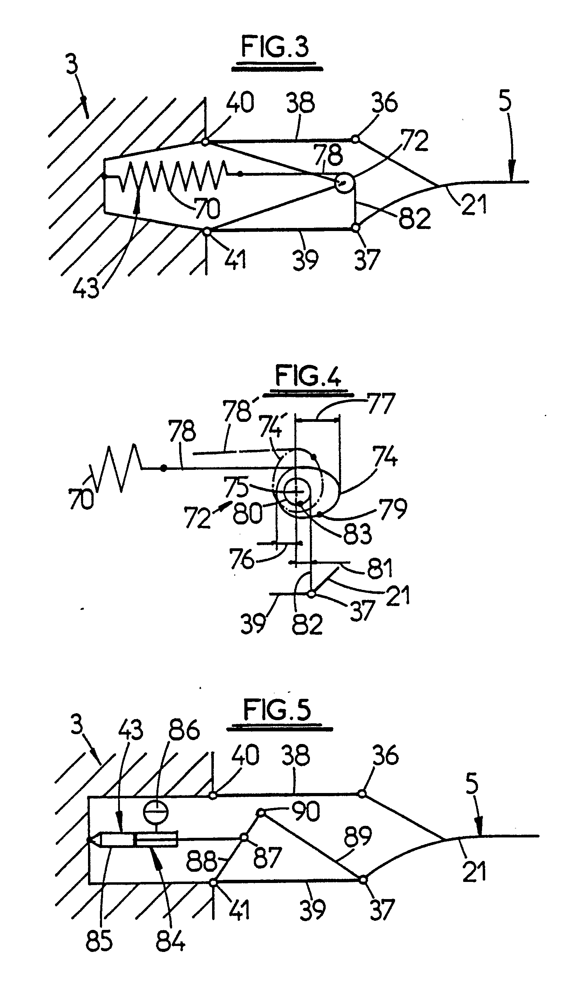

Les figures 3 à 5 montrent schématiquement deux exemples de réalisation d'un mécanisme de délestage selon l'invention.

Sur ces figures, on voit schématiquement le dispositif d'attelage (3), les barres de liaison (38 ; 39) et la poutre de liaison (21).

Sur la figure 3, le mécanisme de délestage (43) comporte un ressort mécanique de traction (70). Ce ressort de traction s'étend horizontalement et partiellement à l'intérieur de l'espace délimité par le dispositif d'attelage (3). A l'une de ses extrémités, le ressort de traction (70) est lié au dispositif d'attelage (3), tandis qu'à son autre extrémité, il est lié à l'une des extrémités d'un premier organe de traction pliable (78), tel qu'un câble par exemple. L'organe de traction pliable (78) s'enroule partiellement sur un guide (72) qui est lié au dispositif d'attelage (3) de sorte à pouvoir tourner autour d'un axe de rotation (75). Un deuxième organe de traction pliable (82) est lié à l'articulation (37) qui lie la barre de liaison inférieure (39) à la poutre de liaison (21). Ce deuxième organe de traction pliable (82) s'enroule également partiellement sur le guide (72).

Sur la figure 4, on voit que ce guide (72) comporte une première piste (74) dont le décentrage par rapport à l'axe de rotation (75) augmente d'une valeur (76) à une valeur (77). Sur cette piste (74) s'enroule partiellement le premier organe de traction pliable (78) qui est lié, à l'une de ses extrémités, au ressort (70) et, à l'autre de ses extrémités, à la piste (74) au moyen d'un organe de fixation (79).

Le guide (72) possède par ailleurs une deuxième piste (80) qui est circulaire avec un rayon (81). Sur cette piste (80) s'enroule partiellement le deuxième organe de traction pliable (82) qui est lié à l'une de ses extrémités à l'articulation (37) et, à l'autre de ses extrémités, à la piste (80) au moyen d'un organe de fixation (83). Le rayon (81) de la piste (80) est plus petit que les décentrages extrêmes (76 ; 77) de la piste (74).

Avec cet agencement, on peut générer un délestage quelconque, par exemple un délestage sensiblement constant, en donnant à la piste (74) la forme adéquate. En effet, lorsque le groupe de fauche (2) passe sur un obstacle, la barre de liaison (39) pivote vers le haut autour de l'articulation (41). Le ressort (70) tire alors sur le premier organe de traction pliable (78), ce qui provoque la rotation du guide (72) autour de l'axe (75) qui est sensiblement dirigé dans la direction d'avance (24) au travail. En tournant, l'excentricité de la piste (74) augmente, de sorte que l'effort de rappel développé par le ressort (70) va travailler avec un bras de levier plus important. Parallèlement, la force de rappel développée par le ressort (70) a diminué, car le ressort est moins tendu. Le couple de rappel qui est égal au produit de l'intensité de la force de rappel par le bras de levier, peut donc être sensiblement constant, dès lors que la diminution de la force de rappel est sensiblement compensée par l'augmentation de l'excentricité de la piste (74).

Sur la figure 5, le mécanisme de délestage (43) comporte un ressort hydropneumatique (84). Celui-ci se compose d'un vérin (85) et d'un accumulateur à gaz (86). Le vérin (85) est lié à l'une de ses extrémités au dispositif d'attelage (3). L'autre extrémité du vérin (85) est liée, au moyen d'une articulation (87), à un levier (88). Ce levier (88) est lié, à l'une de ses extrémités, de manière articulée, au dispositif d'attelage (3) à l'aide de l'articulation (41) liant la barre de liaison inférieure (39) du quadrilatère de liaison déformable au dispositif d'attelage (3). A son autre extrémité, le levier (88) est lié à l'extrémité d'un tirant (89) au moyen d'une articulation (90). A son autre extrémité, le tirant (89) est lié, de manière articulée, à l'articulation (37). Le levier (88) est ainsi rendu solidaire de la barre de liaison inférieure (39) du quadrilatère de liaison déformable et permet au ressort hydropneumatique (84) de tirer sur le quadrilatère de liaison déformable pour délester le groupe de fauche (2).

Lorsque le groupe de fauche (2) passe sur un obstacle, la barre de liaison (39) pivote vers le haut, conjointement avec les leviers (88 ; 89) autour de l'articulation (41). Ceci provoque le raccourcissement du ressort de traction hydropneumatique (84) et la diminution de l'effort de rappel exercé sur le levier pivotant (88). En tournant vers le ressort (84), le levier pivotant (88) augmente cependant le bras de levier avec lequel agit l'effort de rappel exercé par le ressort (84), de sorte que, là aussi, le délestage peut rester relativement constant.

D'autres configurations peuvent être réalisées sans pour autant sortir du cadre de la présente invention tel que défini dans les revendications suivantes.

## Revendications

1. Faucheuse (1) comportant un groupe de fauche (2), un dispositif d'attelage (3) permettant d'atteler celle-ci à un véhicule moteur (4), ledit groupe de fauche (2) étant lié audit dispositif d'attelage (3) au moyen d'un quadrilatère de liaison (38, 39) déformable, et un mécanisme de délestage (43) du groupe de fauche (2) comprenant un organe élastiquement déformable (70 ; 84, 85, 86) lié directement ou indirectement au dispositif d'attelage (3) et exerçant un effort de délestage sur le groupe de fauche (2) par l'intermédiaire d'un dispositif de transmission de l'effort (72, 74, 80, 78, 82 ; 88, 89) qui comporte un organe pivotant (72, 74, 80 ; 88) lié au dispositif d'attelage (3) de sorte à pouvoir pivoter autour d'un axe (75 ; 41), caractérisée par le fait qu'au cours de la rotation de l'organe pivotant (72, 74, 80 ; 88) apparaissant lors du déplacement en hauteur du groupe de fauche (2) autorisé par le quadrilatère de liaison déformable (38, 39), ledit organe pivotant (72, 74, 80 ; 88) fait varier le bras de levier de l'effort de rappel exercé par l'organe élastiquement déformable (70 ; 84, 85, 86) par rapport à l'axe (75 ; 41) dans un sens tel que ledit bras de levier augmente lorsque l'effort de rappel diminue, c'est-à-dire lorsque le groupe de fauche (2) se déplace vers le haut.

2. Faucheuse selon la revendication 1, caractérisée par le fait que la variation du bras de levier est telle que le délestage reste sensiblement constant.

3. Faucheuse selon la revendication 1 ou 2, caractérisée par le fait que l'axe (41) autour duquel l'organe pivotant (88) peut pivoter, est confondu avec l'axe de l'une (41) des articulations (37, 41) de l'une (39) des barres de liaison (3s, 39) du quadrilatère de liaison déformable.

4. Faucheuse selon la revendication 3, caractérisée par le fait que l'axe (41) autour duquel l'organe pivotant (88) peut pivoter, est l'axe de l'articulation (41) liant l'une (39) des barres de liaison (38, 39) du quadrilatère de liaison déformable au dispositif d'attelage (3).

5. Faucheuse selon la revendication 3 ou 4, caractérisée par le fait que l'organe pivotant (88) est solidaire de l'une (39) des barres de liaison (38 ; 39) du quadrilatère de liaison déformable.

6. Faucheuse selon l'une au moins des revendications 1 à 5, caractérisée par le fait que l'axe (75 ; 41) autour duquel l'organe pivotant (72, 74, 80 ; 88) peut pivoter, est sensiblement dirigé suivant la direction d'avance (24) au travail.

7. Faucheuse selon l'une au moins des revendications 1 à 6, caractérisée par le fait que l'organe élastiquement déformable (70 ; 84, 85, 86) s'étend au moins sensiblement horizontalement.

8. Faucheuse selon l'une au moins des revendications 1 à 7, caractérisée par le fait que l'organe élastiquement déformable (70 ; 84, 85, 86) est logé au moins partiellement à l'intérieur de l'espace délimité par le dispositif d'attelage (3).

9. Faucheuse selon l'une au moins des revendications 1 à 8, caractérisée par le fait que l'organe élastiquement déformable est constitué par un ressort mécanique (70) ou par un ressort hydropneumatique (84, 85, 86).

10. Faucheuse selon la revendication 9, caractérisée par le fait que le ressort mécanique (70) ou le ressort hydropneumatique (84, 85, 86) sont des ressorts de traction.

11. Faucheuse selon l'une au moins des revendications 1 à 10, caractérisée par le fait que le dispositif de transmission de l'effort (72, 74, 80, 78, 82) comporte en sus deux organes de traction pliables (78, 82), et que l'organe pivotant (72, 74, 80) est constitué par un guide (72) sur lequel s'enroulent les deux organes de traction pliables (78, 82), ledit guide (72) comportant deux pistes (74, 80), une première piste (74) sur laquelle s'enroule au moins partiellement et à laquelle est lié le premier organe de traction pliable (78) lié par ailleurs à l'organe élastiquement déformable (70), et dont l'excentricité est variable de sorte que le bras de levier du couple de rappel exercé par l'organe élastiquement déformable (70) varie lorsque le guide (72) tourne autour de son axe de rotation (75), et une deuxième piste (80) sur laquelle s'enroule au moins partiellement et à laquelle est lié le deuxième organe de traction pliable (82) lié par ailleurs directement ou indirectement au groupe de fauche (2), et dont l'excentricité par rapport à l'axe de rotation (75) du guide (72) est sensiblement constante.

FIG.1

FIG.2

## FIG.3

3

40  38  36  5

78  72

70  43  41  39  37  82  21

## FIG.4

78´  74´  77

78  74

70  72  75  79
80  83

76

39  82  37  21

81

## FIG.5

3  43  86  40  38  36  5

90

88  87  89

85  84  41  39  37  21